# EUROPÄISCHE PATENTSCHRIFT

(11) **EP 4 217 622 B1**
(45) Veröffentlichungstag und Bekanntmachung des Hinweises auf die Patenterteilung: **26.06.2024**
(21) Anmeldenummer: 21769940.4
(22) Anmeldetag: 26.08.2021
(51) Int. Cl.: F16D 55/2255, F16D 65/18, F16D 65/56

(54) **ZUSPANNEINRICHTUNG EINER SCHEIBENBREMSE**
BRAKE APPLICATION MECHANISM OF A DISK BRAKE
MÉCANISME D'APPLICATION DE FREIN D'UN FREIN À DISQUE

(30) Priorität: 22.09.2020 DE 102020124690
(43) Veröffentlichungstag der Anmeldung: 02.08.2023
(73) Patentinhaber: KNORR-BREMSE Systeme für Nutzfahrzeuge GmbH, 80809 München (DE)
(72) Erfinder: DAHLENBURG, Julian, 91166 Georgensgmünd (DE); STÖGER, Christian, 94486 Osterhofen (DE); PETSCHKE, Andreas, 94127 Neuburg am Inn (DE); ROTH, Natalie, 94474 Aunkirchen (DE); HAUSER, Maximilian, 94081 Fürstenzell (DE); HIDRINGER, Michael, 94544 Hofkirchen (DE); BECK, Thomas, 94034 Passau (DE); HEINDL, Martin, 94535 Eging am See (DE); HABERMANN, Dimitrij, 94569 Stephansposching (DE); THALER, Thomas, 94501 Beutelsbach (DE); SCHRÖPF, Frederic, 80805 München (DE); EICHLER, Thomas, 80809 München (DE)
(86) Internationale Anmeldenummer: PCT/EP2021/073618
(87) Internationale Veröffentlichungsnummer: WO 2022/063516

(56) Entgegenhaltungen:
- DE-A1-102004 042 576
- DE-A1-102014 108 500
- DE-A1-102014 113 370
- DE-B3- 10 307 734
- DE-U1- 29 522 308
- US-A1- 2020 232 527

## Beschreibung

Die Erfindung betrifft eine Zuspanneinrichtung einer Scheibenbremse für ein Nutzfahrzeug gemäß dem Oberbegriff des Anspruchs 1.

Mittels einer solchen Zuspanneinrichtung, die Bestandteil einer Scheibenbremse ist, sind im Fall einer Bremsung Bremsbeläge gegen eine fahrzeugseitige Bremsscheibe pressbar.

Dabei erfolgt die Betätigung der Zuspanneinrichtung pneumatisch oder elektromechanisch unter Mitwirkung eines verschwenkbaren Bremshebels, der sich einerseits an einer Innenwand eines Bremssattels und andererseits an einer verschiebbaren Brücke abstützt, wozu eine Wälzrollenlagerung in Form einer zwischen dem Bremshebel und der Brücke axial und radial gesicherten Wälzrolle angeordnet ist.

Zur Lagerung der Wälzrolle ist im Bremshebel eine Lagerschale ausgebildet, die mit einem geeigneten Kunststoff beschichtet ist, so dass sich eine sogenannte DU-Lagerung ergibt.

An der Brücke wiederum ist zur Lagerung der Wälzrolle ein entsprechend modifiziertes Formteil angebracht, das überdies der radialen und axialen Sicherung der Wälzrolle dient und durch angeformte Ansätze, beispielsweise Laschen oder dergleichen, als Käfigrückführung für die Käfige von Wälzlagern dient, mit denen der Bremshebel an der Innenwand des Bremssattels leichtgängig gelagert ist. Eine solche Zuspanneinrichtung ist aus der DE 103 07 734 B3 bekannt.

Im Fahrbetrieb hat sich jedoch gezeigt, dass die Sicherung der Wälzrolle gegen ein axiales Verschieben bislang nicht ausreicht, so dass es zum Bruch der Laschen kommen kann. Mit der möglichen Folge eines von außen nicht zu erkennenden Versagens der Bremse, was selbstredend ein nicht akzeptables Sicherheitsrisiko darstellt.

Überdies führt die frei drehbare Lagerung der Wälzrolle vielfach zum Abtrag von Partikeln, die in das DU-Lager des Bremshebels eindringen, was insbesondere die Lebensdauer der DU-Lagerung nachteilig beeinflusst.

Um hier Abhilfe zu schaffen, ist in der DE 10 2014 108 500 A1 vorgeschlagen die Wälzrolle verdreh- und verschiebegesichert an der Brücke zu halten. Dazu sind an der Brücke und der Wälzrolle miteinander korrespondierende Formbereiche vorgesehen, beispielsweise als Abplattungen an der Wälzrolle, die an Stützflächen der Brücke anliegen.

Funktional hat sich diese Konstruktion bewährt. Probleme können sich jedoch beim Zusammenbau der Scheibenbremse, insbesondere der Zuspanneinrichtung ergeben, da die Wälzrolle als Einzelteil vor dem Zusammenbau als loses Teil vorliegt, was die Montage insofern erschwert, als eine Fixierung vor einer Endposition nur mit einem entsprechenden Fertigungsaufwand, d.h. einer Montagehilfe möglich ist.

Darüber hinaus gestaltet sich auch die Ausgestaltung sowohl der Wälzrolle wie auch der Brücke relativ aufwändig, da die Abplattungen der Wälzrolle und die Stützflächen der Brücke planeben ausgebildet sind, was nur mit einer relativ aufwändigen spanenden Bearbeitung möglich ist.

In der DE 10 2004 042576 A1 ist eine Zuspanneinrichtung offenbart, bei der die Wälzrolle mittels einer Klammer am Bremshebel befestigt ist, wobei die Klammer in einer Nut der Brücke einliegt. Bei Betätigung des Bremshebels verdreht sich die Wälzrolle relativ zur Brücke, an der die Wälzrolle anliegt.

Der Erfindung liegt die Aufgabe zugrunde, eine Zuspanneinrichtung der gattungsgemäßen Art so weiterzuentwickeln, dass ihre Standzeit mit konstruktiv einfachen Mitteln verbessert und ihr Zusammenbau einfacher wird.

Diese Aufgabe wird durch eine Zuspanneinrichtung mit den Merkmalen des Anspruchs 1 gelöst.

Die erfindungsgemäße Ausgestaltung der Zuspanneinrichtung in der Form, dass die mindestens eine Wälzrolle quasi mit der Brücke durch ein Sicherungselement verbunden ist, ist nicht nur eine Fixierung der Wälzrolle, bezogen auf die Brücke, in axialer, radialer und Verdrehrichtung in eingebauter Position der Zuspanneinrichtung gewährleistet, sondern auch vor einem Einbau in einen Bremssattel. D.h., die Brücke und die Wälzrolle können als Baueinheit vormon tiert und eingesetzt werden, ohne dass besondere Montagemaßnahmen erforderlich sind, um die aus dem Stand der Technik bekannte, gegenüber der Brücke lose Anordnung der Wälzrolle zu installieren.

Da Scheibenbremsen, deren wesentlichen Funktionskomponente jeweils eine Zuspanneinrichtung ist, als Serienprodukte in großen Stückzahlen hergestellt werden, kommt dieser durch die erfindungsgemäße Ausgestaltung mögliche deutliche Montagevereinfachung eine besondere Bedeutung zu, vor allem hinsichtlich einer Kostenminimierung.

Darüber hinaus ergibt sich durch die Erfindung der Vorteil, dass auf den Einsatz bisher bekannter, an der Brücke befestigter Formteile verzichtet werden kann, was ebenfalls zu einer Kostenoptimierung beiträgt.

In diesem Sinne ist auch der nunmehr mögliche Verzicht auf den Einsatz eines gehärteten Stahls zur Fertigung der Wälzrolle zu bemerken, die sich bislang aus der Reibpaarung Stahl/Stahl zwischen dem als Lagerschale ausgebildeten Formteil und der Wälzrolle ergibt.

Das mindestens eine Sicherungselement ist form- oder reibschlüssig an der Brücke und der Wälzrolle gehalten, wobei sich, nach einem weiteren Gedanken der Erfindung, die Verwendung einer Spannhülse als besonders vorteilhaft zeigt, die sowohl in eine Bohrung der Brücke wie auch in eine Bohrung der Wälzrolle eingesteckt und darin reibschlüssig gehalten ist.

Derartige Spannhülsen sind als Normteile im Handel erhältlich und daher besonders kostengünstig. Für einen Toleranzausgleich kann eine der Bohrungen, also die der Brücke oder die der Wälzrolle in geringem Abmaß als Langloch ausgebildet sein.

Prinzipiell ist jedoch das Einbringen der Bohrungen ebenfalls sehr einfach und gegenüber den zum Stand der Technik beschriebenen Abflachungen der Wälzrolle einerseits und der Brücke andererseits deutlich kostengünstiger herzustellen.

Anstelle von Spannhülsen können auch Passstifte in die entsprechend vorbereiteten Bohrungen eingesetzt werden, wobei diese Passstifte, ebenfalls reibschlüssig in der Brücke bzw. der Wälzrolle gehalten sind.

Als eine weitere Ausführungsvariante der Sicherungselemente können Augen an der Brücke vorgesehen sein, in die als Wälzrollenlagerung zwei sich achsgleich ausgerichtete, mit Abstand zueinander angeordnete Wälzrollen mit ihren einander abgewandten Enden eingepresst sind. Der Abstand der Wälzrollen zueinander,also der gebildete Zwischenraum ist dabei so bemessen, dass die Wälzrollen problemlos einsteckbar sind.

Die Augen sind zweckmäßigerweise an die aus Gusseisen bestehende Brücken angeformt. Auch durch diese Ausführungsvariante ist ein sicherer Halt, d.h. eine Verdreh- und Verschiebesicherung der Wälzrollen gewährleistet.

Weiter kann des Sicherungselement aus einem Blechstück bestehen, das sowohl in eine Nut der Lagerstelle der Brücke wie auch in eine Nut der Wälzrolle eingepresst ist, wobei sich dieses Blechstück in Schwenkrichtung des Bremshebels erstreckt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: den schematischen Aufbau einer mit einer Zuspanneinrich-tung nach dem Stand der Technik versehenen Scheiben-bremse in einem Querschnitt
- Fig. 2: eine Einzelheit der erfindungsgemäßen Scheibenbremse in einer perspektivischen Ansicht
- Fig. 3: einen Schnitt durch die Einzelheit gemäß der Linie III-III in Fig. 2
- Fig. 4: eine Brücke der Zuspanneinrichtung in einer perspektivi-schen Ansicht
- Fig. 5: ein weiteres Ausführungsbeispiel einer erfindungsgemäßen Zuspanneinrichtung in einer schaubildlichen Darstellung
- Fig. 6: einen Schnitt durch die Zuspanneinrichtung nach Fig. 5 gemäß der Linie VI-VI in Fig. 5
- Fig. 7: eine weitere Variante der erfindungsgemäßen Zuspanneinrichtung, gleichfalls in einer perspektivischen Ansicht
- Fig. 8: eine weiteres Ausführungsbeispiel der Erfindung in einem Längsschnitt.

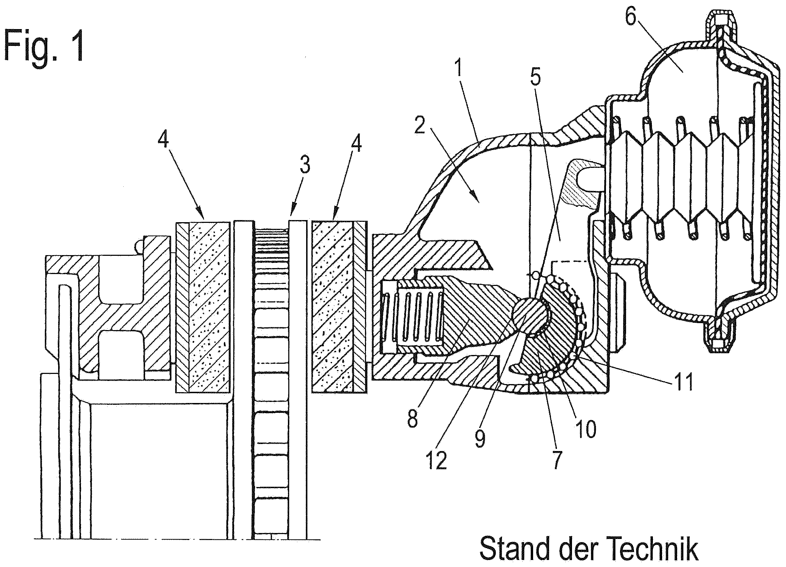

In der Fig. 1 ist eine Scheibenbremse für ein Nutzfahrzeug nach dem Stand der Technik in einem Schnitt dargestellt. Diese Scheibenbremse weist eine Bremsscheibe 3 auf, die an einer nicht gezeigten Achse des Nutzfahrzeuges befestigt ist und von einem Bremssattel 1 umfasst ist, der in Richtung der Bremsscheibe 3 verschiebbar ist.

Im Bremssattel 1 ist eine Zuspanneinrichtung 2 angeordnet, mit der bei einer über einen vorzugsweise pneumatisch betätigten Bremszylinder ausgelösten Bremsung Bremsbeläge 4 an die Bremsscheibe 3 drückbar sind.

Die Zuspanneinrichtung 2 greift hierbei an nicht dargestellte, parallel und mit Abstand zueinander in einer Brücke 8 angeordnete, als Stellspindeln ausgebildete Bremsstempel an.

Mit dem Bremszylinder 6 in Wirkverbindung steht ein Bremshebel 5 der Zuspanneinrichtung 2, der bei Betätigung in Richtung der Bremsscheibe 3 schwenkbar um eine Wälzrolle 9 ist, die parallel zur Ebene der Bremsscheibe 3 verläuft.

An der der Wälzrolle 9 gegenüberliegenden Seite liegt der Bremshebel 5 an jeweils in einem Käfig gehaltenen Wälzkörpern 11 an, die sich an dem in diesem Bereich als Exzenter 7 ausgebildeten Bremshebel 5 einerseits und an einer Innenwand des Bremssattels 1 andererseits abstützen.

Die Wälzrolle 9 als Bestandteil einer Wälzrollenlagerung dient als Drehlager für den Bremshebel 5 und liegt in einer Lagerschale 10 des Exzenters 7. Dabei ist die Lagerschale 10 im Querschnitt ebenso der Querschnittskontur der Wälzrolle 9 angepasst, wie eine konkave Rinne 12, in der die Wälzrolle 9 andererseits einliegt.

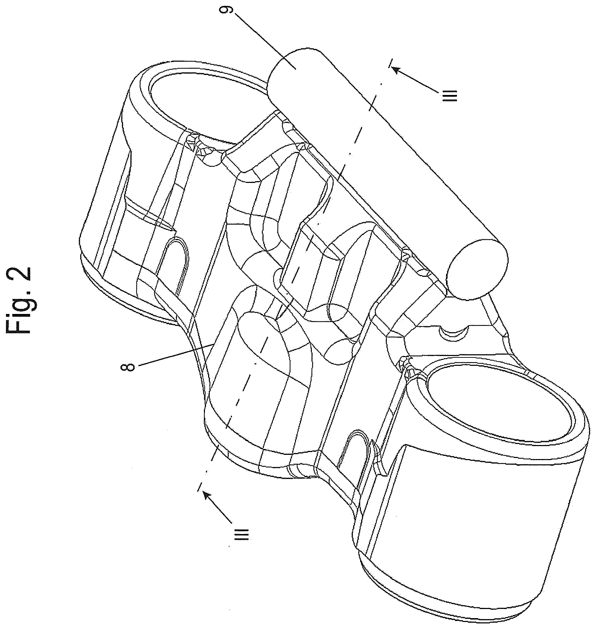

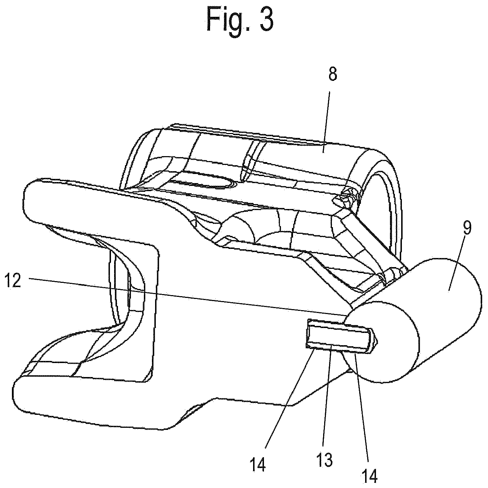

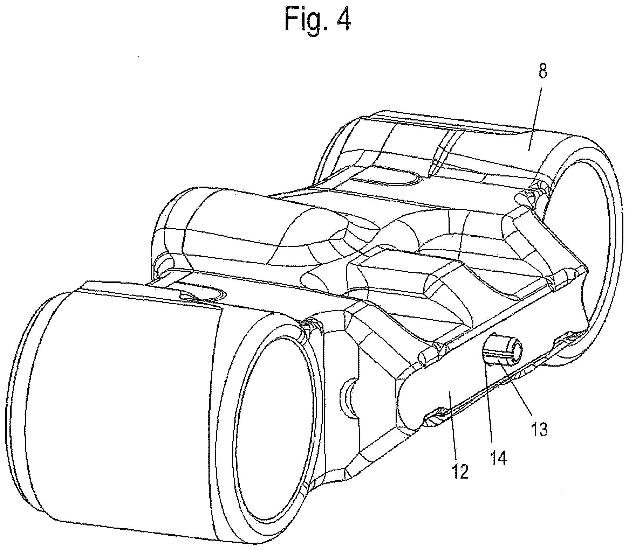

Die **Figuren 2-8** geben Ausführungsvarianten der Zuspanneinrichtung 2 wieder, die, gemäß der Erfindung, mindestens ein mit der Brücke 8 und der Wälzrolle 9 verbundenes Sicherungselement aufweisen.

In den Figuren 2-4 ist die Brücke 8 als Einzelheit der Zuspanneinrichtung 2 abgebildet. In diesem Beispiel besteht das Sicherungselement aus einer Spannhülse 13, die in eine Bohrung 14 sowohl der Brücke 8 im Bereich der Rinne 12 wie auch in eine Bohrung 14 der Wälzrolle 9 eingesteckt ist und darin reibschlüssig gehalten ist.

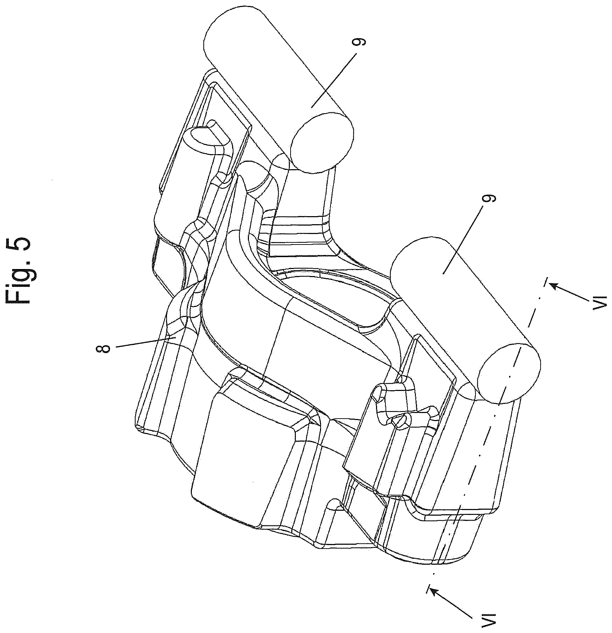

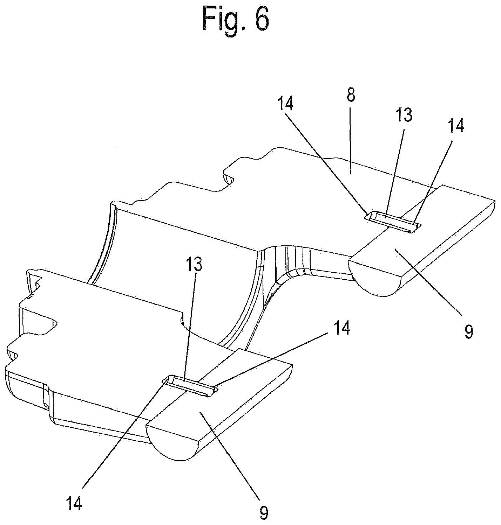

Bei der in den Figuren 5 und 6 gezeigten Variante sind zwei achsgleich ausgerichtete Wälzrollen 9 mit der Brücke 8 durch die Sicherungselemente verbunden, wobei die beiden Wälzrollen 9 abständig zueinander angeordnet sind unter Ausbildung eines Zwischenraums. Bei diesem Beispiel sind die Sicherungselemente ebenfalls als Spannhülsen 13 ausgebildet.

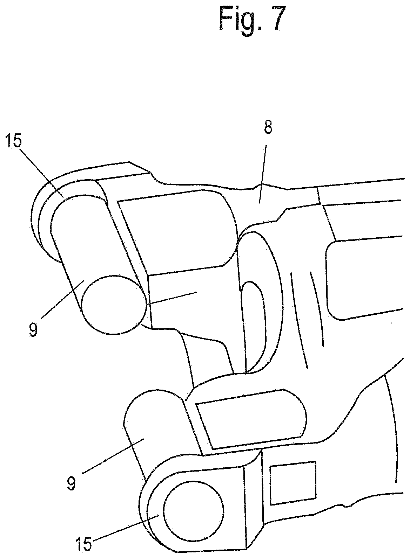

Eine weitere erfindungsgemäße Ausgestaltung der Zuspanneinrichtung 2 ist in der Figur 7 abgebildet. Darin ist die Brücke 8 mit den zwei Wälzrollen 9 zu sehen, die jeweils mit ihren einander abgewandten Endbereichen in Augen 15 der Brücke 8 eingepresst und darin reibschlüssig gehalten sind. Diese Augen 15 sind Bestandteil der Brücke 8, d.h., sie sind bei der Herstellung der Brücke 8 mit angeformt.

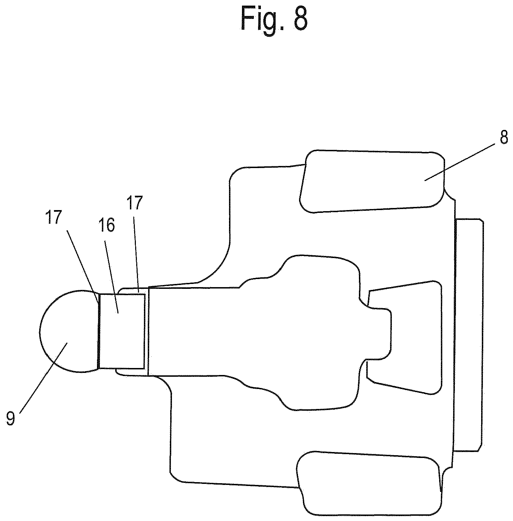

Schließlich gibt die Figur 8 eine Ausführung der Erfindung wieder, bei der als Sicherungselement ein Blechteil 16 vorgesehen ist, das in eine Nut 17 der Brücke 8 einerseits und in eine Nut 17 der Wälzrolle 9 eingepresst ist und so eine reibschlüssige Verbindung hergestellt ist.

### BEZUGSZEICHENLISTE

- 1: Bremssattel
- 2: Zuspanneinrichtung
- 3: Bremsscheibe
- 4: Bremsbelag
- 5: Bremshebel
- 6: Bremszylinder
- 7: Exzenter
- 8: Brücke
- 9: Wälzrolle
- 10: Lagerschale
- 11: Wälzkörper
- 12: Rinne
- 13: Spannhülse
- 14: Bohrung
- 15: Auge
- 16: Blechteil
- 17: Nut

## Patentansprüche

1. Zuspanneinrichtung einer Scheibenbremse für ein Nutzfahrzeug, mit einem verschwenkbaren Bremshebel (5), der sich einerseits an einer Innenwand eines Bremssattels (1) und andererseits mittelbar an einer im Bremssattel (1) verschieblich angeordneten, mindestens einen Bremsstempel tragenden Brücke (8) abstützt, wozu zwischen dem Bremshebel (5) und der Brücke (8) eine verdreh- und verschiebegesichert an der Brücke (8) anliegende Wälzrollenanordnung vorgesehen ist,
**dadurch gekennzeichnet, dass** die Brücke (8) und mindestens eine Wälzrolle (9) der Wälzrollenlagerung durch mindestens ein Sicherungselement verbunden sind.

2. Zuspanneinrichtung einer Scheibenbremse nach Anspruch 1,
**dadurch gekennzeichnet, dass**
das Sicherungselement form- und/oder reibschlüssig in der Brücke (8) und der Wälzrolle (9) gehalten ist.

3. Zuspanneinrichtung einer Scheibenbremse nach Anspruch 1 oder 2,
**dadurch gekennzeichnet, dass**
das Sicherungselement aus einer Spannhülse (13) oder einem Passstift besteht, die oder der in eine Bohrung (14) der Brücke (8) und der Wälzrolle (9) eingepresst ist.

4. Zuspanneinrichtung einer Scheibenbremse nach einem der vorhergehenden Ansprüche,
**dadurch gekennzeichnet, dass**
das Sicherungselement aus einem Blechteil (16) besteht, das in jeweils eine Nut (17) der Brücke (8) und der Wälzrrolle (9) eingepresst ist.

5. Zuspanneinrichtung einer Scheibenbremse nach einem der vorhergehenden Ansprüche,
**dadurch gekennzeichnet, dass**
zwei achsgleich ausgerichtete Wälzrollen (9) vorgesehen sind, die mit Abstand zueinander angeordnet sind.

6. Zuspanneinrichtung einer Scheibenbremse nach Anspruch 5,
**dadurch gekennzeichnet, dass**
jede der beiden Wälzrollen (9) in ein Auge (15) der Brücke (8) eingepresst sind.

7. Zuspanneinrichtung einer Scheibenbremse nach Anspruch 6,
**dadurch gekennzeichnet, dass**
die Augen (15) an die Brücke (8) angeformt sind.

8. Zuspanneinrichtung einer Scheibenbremse nach Anspruch 6 oder 7,
**dadurch gekennzeichnet, dass**
die Augen (15) an den sich gegenüberliegenden Enden der beiden Wälzrollen (9) positioniert sind.

9. Zuspanneinrichtung einer Scheibenbremse nach einem der vorhergehenden Ansprüche,
**dadurch gekennzeichnet, dass**
die mindestens eine Wälzrolle (9) und die Brücke (8) als Baueinheit vormontiert sind.

## Claims

1. Clamping means of a disc brake for a commercial vehicle, having a pivotable brake lever (5) which rests on the one side against an inner wall of a brake caliper (1) and on the other side directly on a bridge (8) arranged displaceably in the brake caliper (1) and carrying at least one brake piston, wherein between the brake lever (5) and the bridge (8) is provided a rolling roller arrangement which rests in a twist-proof and displacement-proof manner against the bridge (8),
**characterised in that** the bridge (8) and at least one rolling roller (9) of the rolling roller arrangement are connected by at least one securing element.

2. Clamping means of a disc brake according to claim 1,
**characterised in that**
the securing element is held in a form-fitting and/or force-fitting manner in the bridge (8) and the rolling roller (9).

3. Clamping means of a disc brake according to claim 1 or 2,
**characterised in that**
the securing element consists of a clamping sleeve (13) or an alignment pin which is pressed into a bore (14) of the bridge (8) and the rolling roller (9).

4. Clamping means of a disc brake according to any of the preceding claims,
**characterised in that**
the securing element consists of a sheet metal part (16) which is pressed respectively into a groove (17) of the bridge (8) and of the rolling roller (9).

5. Clamping means of a disc brake according to any of the preceding claims,
**characterised in that**
two axially aligned rolling rollers (9) are provided which are arranged spaced from one another.

6. Clamping means of a disc brake according to claim 5,
**characterised in that**
each of the two rolling rollers (9) are pressed into an eye (15) of the bridge (8).

7. Clamping means of a disc brake according to claim 6,
**characterised in that**
the eyes (15) of the bridge (8) are moulded on.

8. Clamping means of a disc brake according to claim 6 or 7,
**characterised in that**
the eyes (15) are positioned on opposite ends of the two rolling rollers (9).

9. Clamping means of a disc brake according to any of the preceding claims,
**characterised in that**
the at least one rolling roller (9) and the bridge (8) are premounted as a unit.

## Revendications

1. Mécanisme d'application de frein d'un frein à disque pour un véhicule utilitaire, avec un levier de frein (5) pivotant qui s'appuie d'une part contre une paroi intérieure d'un étrier de frein (1) et d'autre part indirectement contre un pont (8) agencé de manière mobile dans l'étrier de frein (1), portant au moins un patin de frein, pour lequel un ensemble de cylindres de roulement reposant de manière à ne pouvoir ni tourner ni coulisser contre le pont (8) est prévu entre le levier de frein (5) et le pont (8),
**caractérisé en ce que** le pont (8) et au moins un cylindre de roulement (9) du logement de cylindre de roulement sont reliés par au moins un élément de fixation.

2. Mécanisme d'application de frein d'un frein à disque selon la revendication 1,
**caractérisé en ce que**
l'élément de sécurisation est maintenu par complémentarité de formes et/ou par friction dans le pont (8) et le cylindre de roulement (9).

3. Mécanisme d'application de frein d'un frein à disque selon la revendication 1 ou 2,
**caractérisé en ce que**
l'élément de sécurisation se compose d'une douille de serrage (13) ou d'une goupille de serrage, douille ou goupille qui est enfoncée dans un alésage (14) du pont (8) et du cylindre de roulement (9).

4. Mécanisme d'application de frein d'un frein à disque selon l'une quelconque des revendications précédentes,
**caractérisé en ce que**
l'élément de sécurisation se compose d'une partie de tôle (16) qui est enfoncée respectivement dans une rainure (17) du pont (8) et du cylindre de roulement (9).

5. Mécanisme d'application de frein d'un frein à disque selon l'une quelconque des revendications précédentes,
**caractérisé en ce que**
deux cylindres de roulement (9) alignés axialement sont prévus, lesquels sont agencés à distance l'un de l'autre.

6. Mécanisme d'application de frein d'un frein à disque selon la revendication 5,
**caractérisé en ce que**
chacun des deux cylindres de roulement (9) est enfoncé dans un oeillet (15) du pont (8).

7. Mécanisme d'application de frein d'un frein à disque selon la revendication 6,
**caractérisé en ce que**
les oeillets (15) sont formés au niveau du pont (8).

8. Mécanisme d'application de frein d'un frein à disque selon la revendication 6 ou 7,
**caractérisé en ce que**
les oeillets (15) sont positionnés au niveau des extrémités opposées des deux cylindres de roulement (9).

9. Mécanisme d'application de frein d'un frein à disque selon l'une quelconque des revendications précédentes,
**caractérisé en ce que**
le au moins un cylindre de roulement (9) et le pont (8) sont prémontés comme unité de construction.
